# EUROPÄISCHE PATENTSCHRIFT

(11) **EP 0 554 790 B1**
(45) Veröffentlichungstag und Bekanntmachung des Hinweises auf die Patenterteilung: **17.12.1997**
(21) Anmeldenummer: 93101268.6
(22) Anmeldetag: 28.01.1993
(51) Int. Cl.: H04N 7/01

(54) **Verfahren zur Abtastratenumsetzung eines digitalen Videosignals**
Method for converting the sampling rate of a digital video signal
Procédé pour la conversion de la fréquence d'échantillonage d'un signal vidéo numérique

(30) Priorität: 07.02.1992 DE 4203478
(43) Veröffentlichungstag der Anmeldung: 11.08.1993
(73) Patentinhaber: DEUTSCHE THOMSON-BRANDT GMBH, 78048 Villingen-Schwenningen (DE)
(72) Erfinder: Rothermel, Albrecht, W-7730 VS-Villingen (DE); Schweer, Rainer, W-7732 Niedereschach (DE); Gillies, David, F-67000 Strasbourg (FR); Stolte, John, W-7730 VS-Tannheim (DE)

(56) Entgegenhaltungen:
- EP-A- 0 250 632
- EP-A- 0 454 115
- GB-A- 2 138 246
- PATENT ABSTRACTS OF JAPAN vol. 12, no. 367 (E-664)(3214) 30. September 1988 &JP-A-63 117 582

## Beschreibung

Die Erfindung betrifft ein Verfahren zur Umsetzung eines digitalen Videosignals mit einem ersten Abtastraster in ein zweites Abtastraster.

Die Erfindung geht aus von einem Verfahren gemäß dem Oberbegriff des Anspruchs 1. Eine digitale Signalverarbeitung von Videosignalen erfolgt in Fernsehgeräten u.a. bei der Signalspeicherung mit digitalen Speichern, bei der Signalverarbeitung in einem Fernsehempfänger oder bei der Zeilenverdopplung, bei der dasselbe Signal in zwei aufeinanderfolgenden Zeilen auf den Bildschirm geschrieben wird. In der Praxis ist dabei die Verwendung verschiedener Taktfrequenzen für verschiedene Signalverarbeitungsteile sinnvoll. Beispielsweise wird für die Decodierung von nach PAL oder NTSC codierten Farbsignalen häufig ein mit dem Farbträger verkoppelter Takt verwendet. Dieser Takt ist für die Decodierung der Farbinformation vorteilhaft. Für alle Arten der Signalverarbeitung, die Bildpunkte aus verschiedenen Zeilen, (zweidimensional) oder aus verschiedenen Halbbildern (dreidimensional) kombinieren, ist ein Abtastraster vorteilhaft, das eine feste Phasenbeziehung zu den Zeilen des Videosignals hat (sog. orthogonales Raster). Es ist daher oftmals notwendig, ein digitales Videosignal mit einem ersten Abtastraster in ein digitales Videosignal mit einem zweiten, anderen Abtastraster umzusetzen. Das ist grundsätzlich dadurch möglich, daß das Videosignal mit dem ersten Abtastraster durch D/A-Wandlung in ein analoges Videosignal umgesetzt und dieses mit dem zweiten Abtastraster erneut zur Gewinnung des umgesetzten digitalen Videosignals abgetastet wird. Die dabei notwendige D/A-Wandlung und A/D-Wandlung erfordert aber einen zusätzlichen Schaltungsaufwand und bewirkt unvermeidbare Verluste und Fehler.

Aus der EP-A-0 250 632 ist ein digitaler Bild- und Zeilenzahlwandler für Farbfernsehsignale bekannt. Dabei werden die Farbfernsehsingale digitalisiert und in ihre Bildkomponentensignale mittels eines Eingangs-Prozessors zerlegt und halbbildweise in einem Bildspeicher gespeichert. Ein Eingangsfilter reduziert die zu speichernde Datenmenge, die blockweise in den Bildspeicher geschrieben wird. Ausgangsseitig werden die ausgelesenen Daten in einem Ausgangsfilter gefiltert und die vorherige Datenreduzierung wird rückgängig gemacht. Für die nach der neuen Bild- und Zeilenrasternorm wiederzugebenden Bildpunkte findet bezüglich der horizontalen und vertikalen Nachbarbildpunkte eine Interpolation statt.

Aus der GB-A-2 138 246 ist ein Verfahren zur Umsetzung eines digitalen Videosignals bekannt, bei dem jeweils vier aufeinanderfolgende Abtastwerte des Eingangssingals genutzt werden um einen Abtastwert des Ausgangssignals mit geänderter Abtastrate zu erzeugen. Zwischen den vier aufeinanderfolgenden Abtastwerten findet eine gewichtete Interpolation statt, wobei ein ROM durch eine Folge von aus dem Ausgangstakt abgeleiteten Adresswerten angesteuert wird.

Aus der EP-A-0 454 115 ist eine Vorrichtung für die Umsetzung eines Fernsehsingals einer ersten Fernsehnorm in ein Fernsehsignal einer zweiten Fernsehnorm bekannt. Darin wird nicht nur die Abtastrate bezüglich der einzelnen Videozeilen umgesetzt, sondern es wird auch die Anzahl der Videozeilen pro Bild verändert. Für die Umsetzung einer HDTV-Videozeile in eine NTSC-Videozeile wird erwähnt, daß jeweils zwischen zwei Pixel-Werten gemittelt wird, um einen Pixel-Wert der NTSC-Videozeile zu erzeugen.

Der Erfindung liegt die Aufgabe zugrunde, ein einfaches Verfahren zur Umsetzung eines digitalen Videossignals von einem ersten Abtastraster in ein zweites Abtastraster zu schaffen, das rein digital arbeitet und keine D/A-Wandlung und A/D-Wand lung benötigt. Diese Aufgabe wird durch die im Anspruch 1 angegebene Erfindung gelöst. Vorteilhafte Weiterbildungen der Erfindung sind in den Unteransprüchen angegeben.

Bei der Erfindung wird vorzugsweise im Eingangssignal zunächst die Phasenlage eines Abtastwertes am Beginn der Zeile, z.B. des ersten Abtastwertes der Zeile, relativ zum Zeilensynchronimpuls ermittelt. Außerdem wird die Phasenlage eines Abtastwertes am Ende der Zeile, vorzugsweise des letzten Abtastwertes der Zeile, ermittelt. Darüberhinaus wird die Gesamtzahl der Abtastwerte der Zeile des Eingangssignals ermittelt. Durch diese Werte ist dann die zeitliche Lage aller Abtastwerte des Eingangssignales innerhalb der Zeile definiert. Die Lage des zweiten Abtastrasters, in das das Videosignal umgesetzt werden soll, ist außerdem bekannt, da dieses mit der Zeile verkoppelt ist und somit eine definierte konstante Phasenlage zur Zeilenperiode hat. Das bedeutet, daß nunmehr die zeitliche Lage aller Abtastwerte des Eingangssignals und ebenso die zeitliche Lage aller gewünschten Abtastwerte des Ausgangssignals bekannt sind. Das ergibt die Möglichkeit, die Abtastwerte jeweils im Digitalbereich umzurechnen, ohne daß eine D/A-Wandlung oder A/D-Wandlung erforderlich ist. Die Umrechnung erfolgt insbesondere durch eine digitale Interpolation. Entweder wird jeweils ein Abtastwert des zweiten Abtastrasters durch Interpolation aus dem zeitlich davor und dem zeitlich danach liegenden Abtastwert des ersten Abtastrasters des Eingangssignales durch eine lineare Interpolation ermittelt. Besser werden für die Errechnung eines Abtastwertes des zweiten Abtastrasters mehrere zeitlich benachbarte Abtastwerte des ersten Abtastrasters verwendet, z.B. nach einer genau definierten Interpolationsvorschrift und eine entsprechend dem zeitlichen Abstand gewichtete Interpolation. Das erste Abtastraster des Eingangssignals kann dabei beliebig sein, z.B. mit der Farbträgerfrequenz verkoppelt, freischwingend oder auch zeitfehlerbehaftet.

Die Phasenbeziehung zwischen dem ersten Abtastraster des Eingangssignals und dem zweiten Abtastraster des Ausgangssignals kann sich von Abtastwert zu Abtastwert in Abhängigkeit von dem Verhältnis der Abtastfrequenzen der beiden Abtastraster ändern. Diese Abweichung wird durch die erfindungsgemäße Messung jedoch berücksichtigt und führt nicht zu Fehlern, da für jede Zeile des Eingangssignals Anfangsphase, Endphase und Zahl der Abtastwerte während der Zeile ausgewertet werden.

Die Erfindung wird im folgenden anhand der Zeichnung erläutert. Darin zeigen
- Fig. 1: die Abtastraster des Eingangssignals und des Ausgangssignals während einer Zeile,
- Fig. 2: ein vereinfachtes Blockschaltbild einer Schaltung zur Durchführung des erfindungsgemäßen Verfahrens und
- Fig. 3: ein weiteres Blockschaltbild zur Erläuterung von Fig. 2.

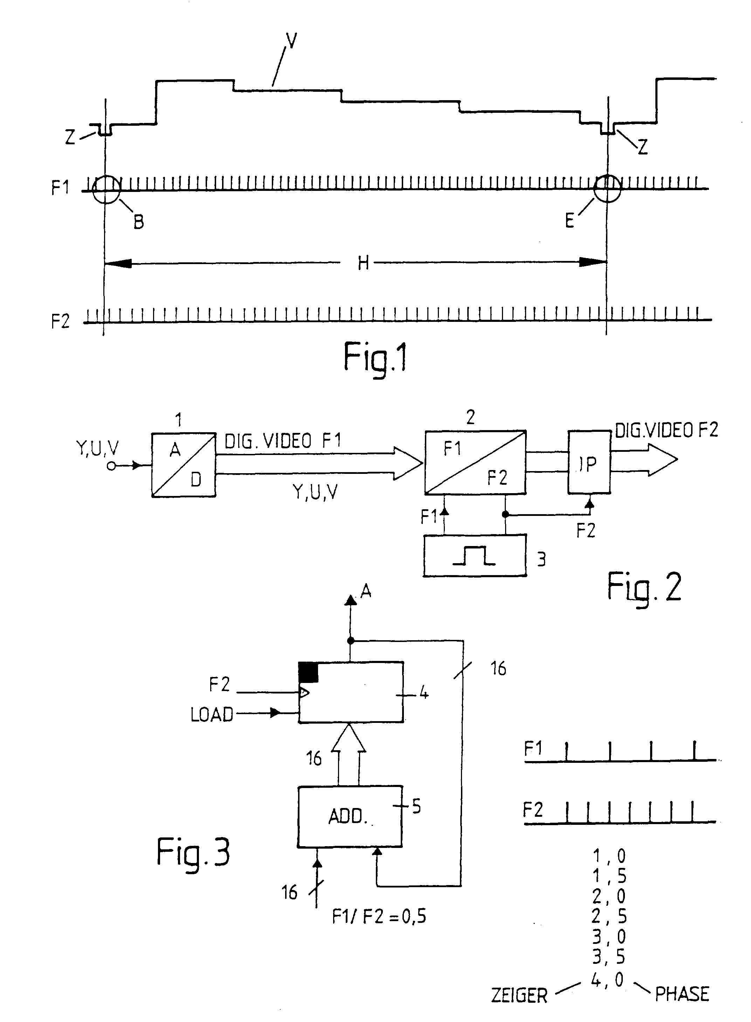

Fig. 1 zeigt das analoge Videosignal V während einer Zeilenperiode H zwischen zwei Zeilensynchronimpulsen Z. Dieses Eingangssignal V ist mit einem ersten Abtastraster F1 digitalisiert. Dabei ist F1 nicht mit der Zeilenperiode verkoppelt, sondern in Frequenz und Phase relativ zur Zeilenperiode unbestimmt. Das Abtastraster F1 kann z.B. mit der Farbträgerfrequenz verkoppelt sein oder von einem freilaufenden Oszillator kommen. Das Videosignal V kann z.B. ein Leuchtdichtesignal Y oder ein Farbdifferenzsignal U oder V sein.

Zur Auswertung des Abtastrasters F1 für die Signalumwandlung wird zunächst die Phasenlage des ersten Abtastwertes relativ zum Zeilensynchronimpuls Z zu Beginn der Zeile gemessen, wie durch den Kreis B angedeutet ist. Sodann wird die Phasenlage des letzten Abtastwertes zum Zeilensynchronimpuls Z am Ende der Zeile H gemessen, wie durch den Kreis E angedeutet ist. Sodann wird die Gesamtzahl der Abtastwerte innerhalb der Zeile H gemessen. Durch diese Meßwerte ist das Abtastraster F1 in Frequenz und Phase relativ zur Zeile H eindeutig definiert. Das Abtastraster F2 des abgehenden digitalen Videosignals, in das das Eingangssignal umgesetzt wird, hat indessen eine definierte Frequenz und Phasenlage zur Zeile H. Das bedeutet, daß die Frequenz ein ganzzahliges Vielfaches der Zeilenfrequenz ist und somit die Abtastwerte ständig dieselbe Phasenlage zum Zeilensynchronimpuls Z haben, wie in Fig. 1 dargestellt ist. Das bedeutet, daß sowohl im Abtastraster Fl als auch im Abtastraster F2 nunmehr alle Abtastwerte innerhalb der Zeile H eine bekannte zeitliche Lage haben. Dadurch ist es jetzt möglich, jeden Abtastwert des Abtastrasters F1 in einen entsprechenden Abtastwert des Abtastrasters F2 umzuwandeln. Diese Umwandlung erfolgt durch eine digitale Interpolation. Beispielsweise wird jeweils ein Abtastwert für F2 durch Interpolation aus dem zeitlich davor und dem zeitlich danach liegenden Abtastwert aus F1 durch Wichtung entsprechend der zeitlichen Lage ermittelt.

In Fig. 2 wird das Videosignal, z.B. Y, U oder V, dem A/D-Wandler 1 zugeführt. Dieser erzeugt ein entsprechendes digitales Videosignal mit dem Abtastraster F1. Dieses Signal gelangt auf den als Umsetzer arbeitenden Pufferspeicher 2, der gemäß Fig. 1 arbeitet. Der Speicher 2 wird von dem Taktgenerator 3 mit den Abtastrastern F1 und F2 gespeist, die gemäß Fig. 1 ausgewertet werden. Der Speicher 2 steuert das Interpolationsfilter IP für die Interpolation der Abtastwerte von F1. Am Ausgang des Filters IP entsteht dadurch ein entsprechendes digitales Videosignal, z.B. Y oder U oder V, das von dem Abtastraster F1 in das Abtastraster F2 umgesetzt ist.

Fig. 3 zeigt ein Blockschaltbild für die Verarbeitung von F1 und F2. Der Speicher 4 wird an einem Steuereingang mit dem Abtastraster F2 getaktet und am LOAD-Eingang jeweils am Anfang der Zeile auf einen einer bestimmten Phase entsprechenden Aufangswert gesetzt, z.B. 0 oder 0,25 oder 0,5. In dem Addierer 5 wird von Takt zu Takt eine Zahl zur jeweils gespeicherten Zahl addiert. In diesem Beispiel ist angenommen, daß diese Zahl 0,5 beträgt und das Frequenzverhältnis F1/F2 = 0,5 ist. Der Addierer 5 in Verbindung mit dem Speicher 4 wirkt somit als Integrierer und addiert immer 0,5 auf. Am Ausgang A des 16 Bit-Speichers 4 entsteht dann die dargestellte Zahlenfolge, die jeweils um 0,5 ansteigt. Die zweite Stelle der dargestellten Zahlen deutet jeweils die Phase eines Abtastwertes von F2 bezüglich des Rasters F1 an. Die erste Stelle vor dem Komma ist gewissermaßen ein Zeiger auf einen Abtastwert von F1 oder ein Zähler für die aufeinander folgenden Abtastwerte. Sie stellt eine Speicheradresse dar und ist eine während der Zeile jeweils ansteigende Zahl. Die Zahl der Abtastwerte von F2 während einer Zeile H kann z.B. 1053 betragen.

Für die Ermittlung der Phasenlage von F1 zur Zeile H muß nicht unbedingt der erste oder letzte Abtastwert von F1 verwendet werden. Es kann allgemein ein Abtastwert im Bereich des Zeilenanfangs, z.B. der zweite oder dritte Abtastwert, und entsprechend ein Abtastwert im Bereich des Zeilenendes, z.B. der vorletzte oder vorvorletzte Abtastwert verwendet werden. Es kommt darauf an, daß die Phase von F1 relativ zum Zeilen synchron impuls am Beginn und am Ende einer Zeile H ermittelt wird.

Die Schaltung ist besonders vorteilhaft für die monolytische Integration. Dabei können folgende handelsübliche Bauteile verwendet werden:

| | |
|---|---|
| Pufferspeicher 2 | uPD 41101-2 |
| Filterbausteine | ZR 33891 |
| Addierer 5 | 74283 (4x) |
| Register f. Steuerwerk | 74273 (2x). |

Die Messung der Phase eines Abtastwertes von F1 gemäß B oder E in Fig. 1 ist grundsätzlich nur einmal in jeder Zeile erforderlich, da dieser Wert zusammen mit der Anzahl der Impulse für das Impulsraster ausreichend und eindeutig ist. Das bedeutet, daß für jede Zeile die Phaseninformation des ersten Abtastwertes einer Zeile und die Phaseninformation des ersten Abtastwertes der nächsten Zeile ausgewertet wird. Dann liegt nur eine Phasenmessung in jeder Zeile vor, während jedoch diese Messung zweimal für die Steuerung verwendet wird, indem sie einmal das Zeilenende der Zeile n und dann den Zeilenanfang der Zeile n+1 markiert. Im einfachsten Fall erfolgt die beschriebene Interpolation aus dem zeitlich davorliegenden und dem zeitlich folgenden Abtastwert. Eine derartige einfache Interpolation wird in der Praxis den Anforderungen oftmals nicht genügen. Vorzugsweise wird daher eine Interpolation aus etwa 6 - 8 Werten des Eingangssignales durchgeführt.

## Patentansprüche

1. Verfahren zur Umsetzung eines digitalen Videosignals von einem ersten Abtastraster in ein zweites Abtastraster, das eine feste Phasenlage zur Zeilenperiode des Videosignals aufweist, unter Verwendung eines Interpolationsfilters, in dem die Abtastwerte für das zweite Abtastraster aus einer Anzahl benachbarter Abtastwerte des ersten Abtastrasters nach einer Interpolationsvorschrift berechnet werden, wobei für jede Zeile (H) des Eingangssignals die Phasenlage eines Abtastwertes im ersten Abtastraster der Zeile (H) zum Zeilensynchronimpuls (Z) und die Gesamtzahl der Abtastwerte im ersten Abtastraster während der Zeile (H) ermittelt wird und daß daraus eine Zahlenfolge für die aufeinanderfolgenden Abtastwerte des zweiten Abtastrasters gebildet wird, um jeweils den Zugriff des Interpolationsfilters auf die für die Interpolation zu verwendenden Abtastwerte des ersten Abtastrasters entsprechend zu steuern,
wobei der ganzzahlige Teil jeder Zahl der Zahlenfolge einen Zeiger auf den dem zugehörigen Abtastwert im zweiten Abtastraster vorausgehenden oder zu ihm synchronen Abtastwert im ersten Abtastraster darstellt, und der gebrochene Teil der Zahl den Interpolationsschritt bezogen auf das erste Abtastraster zwischen dem genannten Abtastwert im ersten Abtastraster und dem darauffolgenden Abtastwert darstellt, der der Position des zugehörigen Abtastwertes im zweiten Abtastraster entspricht,
und wobei die Zahlen der Zahlenfolge sequentiell erzeugt werden, indem die erste Zahl auf einen der ermittelten Phase entsprechenden Wert gesetzt wird (LOAD) und jede weitere Zahl durch Addition des Quotienten aus den den ersten und zweiten Abtastrastern entsprechenden ersten und zweiten Abtastraten zur vorhergehenden Zahl gebildet wird.

2. Verfahren nach Anspruch 1, **dadurch gekennzeichnet,** daß der Abtastwert, dessen Phasenlage ermittelt wird, ein Abtastwert zu Beginn oder am Ende der Zeile ist, z.B. der zweite oder dritte Abtastwert, bzw. der vorletzte oder vorvorletzte Abtastwert.

3. Verfahren nach Anspruch 2, **dadurch gekennzeichnet**, daß der Abtastwert, dessen Phasenlage ermittelt wird, der erste oder letzte Abtastwert der Zeile ist.

4. Verfahren nach Anspruch 2, **dadurch gekennzeichnet**, daß als Abtastwert am Ende der Zeile, dessen Phasenlage ermittelt wird, der erste Abtastwert der folgenden Zeile verwendet wird.

5. Verfahren nach Anspruch 1, dadurch gekennzeichnet, daß jeder digitale Abtastwert des zweiten Abtastrasters durch Interpolation aus mehreren zeitlich benachbarten Abtastwerten gewonnen wird.

## Claims

1. Method of converting a digital video signal from a first scanning raster into a second scanning raster, which has a fixed phase angle relative to the line period of the video signal, using an interpolation filter in which the sampling values for the second scanning raster are calculated from a number of adjacent sampling values of the first scanning raster in accordance with a set of interpolation rules, wherein for each line (H) of the input signal the phase angle of a sampling value in the first scanning raster of the line (H) is determined relative to the line synchronising pulse (Z) and the total number of sampling values in the first scanning raster during the line (H) is also determined, and that a numerical sequence for the successive sampling values of the second scanning raster is formed therefrom in order to appropriately control the access of the interpolation filter to the respective sampling values of the first scanning raster that are to be used for the interpolation process, wherein the integral part of each numeral of the numerical sequence represents a pointer to the sampling value in the first scanning raster preceding the appertaining sampling value in the second scanning raster or the sampling value in the first scanning raster synchronised therewith, and the fractional part of the numeral represents the interpolation step with respect to the first scanning raster between the said sampling value in the first scanning raster and the succeeding sampling value which corresponds to the position of the appertaining sampling value in the second scanning raster,
and wherein the numerals of the numerical sequence are produced sequentially in that the first numeral is set (LOAD) to a value corresponding to the detected phase and in that each further numeral is formed by the addition of the quotient of the first and second scanning rates corresponding to the first and second scanning rasters to the preceding numeral.

2. Method in accordance with Claim 1, characterised in that, the sampling value whose phase angle is being determined is a sampling value at the beginning or at the end of the line e.g. the second or third sampling value, or, the penultimate or antepenultimate sampling value.

3. Method in accordance with Claim 2, characterised in that, the sampling value whose phase angle is being determined is the first or last sampling value of the line.

4. Method in accordance with Claim 2, characterised in that, the first sampling value of the following line is used as the sampling value at the end of the line, the phase angle of which said sampling value is being determined.

5. Method in accordance with Claim 1, characterised in that, each digital sampling value of the second scanning raster is obtained by interpolating from a plurality of sampling values that are adjacent in time.

## Revendications

1. Procédé pour la conversion d'un signal vidéo numérique d'une première trame d'échantillonnage en une deuxième trame d'échantillonnage, qui possède une position de phase fixe par rapport à la période de ligne du signal vidéo, grâce à l'utilisation d'un filtre d'interpolation dans lequel les échantillons afférents à la deuxième trame d'échantillonnage sont calculés à partir d'un nombre d'échantillons voisins de la première trame d'échantillonnage, conformément à une directive d'interpolation, où la position de phase d'un échantillon de la première trame d'échantillonnage de la ligne (H) par rapport à l'impulsion de synchronisation de ligne (Z) et le nombre total des échantillons de la première trame d'échantillonnage pendant la ligne (H) sont déterminés pour chaque ligne (H) du signal d'entrée et où une séquence numérique est ainsi formée pour les échantillons consécutifs de la deuxième trame d'échantillonnage, afin de commander en conséquence l'accès du filtre d'interpolation aux échantillons de la première trame d'échantillonnage à utiliser pour l'interpolation ; où la partie entière de chaque nombre de la séquence numérique représente un indicateur de l'échantillon précédant l'échantillon afférent de la deuxième trame d'échantillonnage ou synchrone avec celui-ci et où la partie fractionnée du nombre représente l'étape d'interpolation rapportée à la première trame d'échantillonnage entre l'échantillon cité dans la première trame d'échantillonnage et l'échantillon suivant qui correspond à la position de l'échantillon afférent dans la deuxième trame d'échantillonnage et où les nombres de la séquence numérique sont générés de façon séquentielle, en donnant au premier nombre une valeur correspondant à la phase déterminée (LOAD) et en formant chaque nombre supplémentaire par addition du quotient formé à partir de la première et de la deuxième fréquence d'échantillonnage correspondant aux première et deuxième trames d'échantillonnage au nombre précédent.

2. Procédé selon la revendication 1, caractérisé en ce que l'échantillon dont la position de phase est déterminée, correspond à un échantillon en début ou en fin de ligne, p. ex. le deuxième ou le troisième échantillon ou l'avant-dernier ou l'antépénultième échantillon.

3. Procédé selon la revendication 2, caractérisé en ce que l'échantillon dont la position de phase est déterminée, correspond au premier ou au dernier échantillon de la ligne.

4. Procédé selon la revendication 2, caractérisé en ce que le premier échantillon de la ligne suivante est utilisé comme échantillon en fin de ligne dont la position de phase est déterminée.

5. Procédé selon la revendication 1, caractérisé en ce que chaque échantillon numérique de la deuxième trame d'échantillonnage est obtenu par interpolation à partir de plusieurs échantillons voisins sur un plan chronologique.
